# EUROPÄISCHE PATENTSCHRIFT

(11) **EP 2 128 816 B1**
(45) Veröffentlichungstag und Bekanntmachung des Hinweises auf die Patenterteilung: **02.10.2013**
(21) Anmeldenummer: 09007047.5
(22) Anmeldetag: 27.05.2009
(51) Int. Cl.: H04N 1/12, G01N 21/952

(54) **Rotationsscanner sowie Verfahren zum Scannen eines Körpers und ein Verfahren zum Prüfen der Bedruckung eines Körpers**
Rotation scanner as well as method for scanning a body and a method of print proofing of a body
Balayeur à rotation et procédé de balayage d'un corps et un procédé de vérification de ce qui est imprimé sur un corps

(30) Priorität: 27.05.2008 DE 102008025271; 28.05.2008 DE 102008025561; 01.10.2008 DE 102008049837
(43) Veröffentlichungstag der Anmeldung: 02.12.2009
(73) Patentinhaber: Eyec GmbH, 20459 Hamburg (DE)
(72) Erfinder: Srpingmann, Sören, 20359 Hamburg (DE); Lütjens, Dirk, 22459 Hamburg (DE); Ansgar, Kaupp, 21521 Wohltorf (DE)
(74) Vertreter: Reuther, Martin

(56) Entgegenhaltungen:
- EP-A1- 1 760 426
- WO-A-2005/025872
- WO-A-2007/070407
- DE-A1- 10 055 206
- JP-A- 11 051 620
- JP-A- 2000 121 564
- JP-A- 2005 227 257
- US-A- 5 361 913

## Beschreibung

Die Erfindung betrifft Rotationsscanner sowie ein Verfahren zum Scannen eines Körpers und ein Verfahren zum Prüfen der Bedruckung eines Körpers.

Derartige Rotationsscanner sind beispielsweise als Hülsenscanner hinlänglich bekannt und weisen in der Regel, wie beispielsweise in der EP 1 760 426 A1 offenbart, eine Kamera, die oberhalb zweier parallel angeordneter Walzen angeordnet ist, auf, wobei die Walzen eine auf diese gelegte Hülse in Rotation versetzen können, so dass die Kamera die Oberfläche der Hülse scannen und beispielsweise ein Druckbild prüfen kann. Auch die JP 2005-227257 A offenbart einen derartigen Rotationsscanner, wobei hier die Kamera unterhalb und zwischen den beiden parallel angeordneten Walzen angeordnet ist. Derartige Rotationsscanner sind einerseits zu unterscheiden von Trommelscannern, wie diese beispielsweise in der DE 199 36 620 A1 offenbart sind und bei welchen Durchsichtvorlagen auf einer durchsichtigen Trommel aufgespannt und von innen beleuchtet werden, wobei die Trommel an sich eigenständig auf einer Welle gelagert und letztlich der Träger des zu scannenden Objekts ist. Auch sind derartige Rotationsscanner von Filmscannern oder -vorführapparaten oder Folienscannern zu unterscheiden, wie diese beispielsweise in der JP 04-0040061 A, der EP 0 576 371 A1 oder der US 4,973,151 offenbart sind, bei welchen ebenfalls eine separat auf Wellen gelagerte Walze vor einer entsprechenden Scanneinrichtung angetrieben geführt wird, um den Film bzw. die Folie geeignet zu positionieren. Während somit bei Trommelscannern bzw. Film- oder Folienscannern ein im Wesentlichen zweidimensionales Objekt über eine mit auf Wellen gelagerte Walze an einer Scanneinrichtung vorbeiführen, sind Rotations- bzw. Hülsenscanner auf das Scannen dreidimensionaler Objekte ausgelegt, die nicht über Achsen, Wellen oder Zapfen verfügen, mit denen diese Objekte gelagert werden können. Insofern sind bei Rotationsscannern die zu scannenden Objekte ungelagert, wobei sie durch ihr Gewicht oder aber durch Anpresswalzen oder ähnliche Einrichtung geführt werden, um einen betriebssicheren Scannvorgang zu gewährleisten.

Es ist Aufgabe vorliegender Erfindung, einen Rotationsscanner derart auszubilden, dass der Rotationsscanner kompakter und flexibler einsetzbar baut. Als Lösung wird ein Rotationsscanner mit den Merkmalen des Anspruchs 1 vorgeschlagen.

In vorliegendem Zusammenhang beschreibt der Begriff "Fokalbereich" den Bereich, innerhalb dessen die Kamera eine Oberfläche ausreichend scharf abbildet. Zwar wird im Allgemeinen diesbezüglich von einem Fokus gesprochen, welcher jedoch in der Regel idealisiert lediglich einen Punkt beschreibt. Bei Zeilenkameras wird es sich, dieses liegt in der Natur derartiger Kameras, jedoch um eine Strecke handeln. Bei Matrixkameras ist dieses in der Regel eine Fläche. Einerseits ist jedoch der Fokus aufgrund optischer Grenzwerte nie punktuell bzw. strecken- oder flächenförmig ausgebildet, andererseits haben sämtliche optischen Systeme eine gewisse Schärfentiefe oder Tiefenschärfe, die es ermöglichen, in einem um den Fokus liegenden Fokalbereich noch ein ausreichend scharfes Bild zu erhalten.

Vorzugsweise wird die Anlegekraft durch die Schwerkraft bereitgestellt, was einen besonders einfachen und kostengünstigen Aufbau ermöglicht. Andererseits kann die Anlegekraft auch durch Anpresseinrichtungen, wie beispielsweise Anpresswalzen, oder auch durch andere Felder, wie beispielsweise elektrische oder elektrostatische Felder, magnetische Felder oder Luftdrücke, bereitgestellt werden.

Auch versteht es sich, dass die Rotationsachse nicht zwingend festliegen muss. Vielmehr kann sie während der Rotationsbewegung auch wandern bzw. unterschiedliche Neigungswinkel einnehmen, was insbesondere bei Oberflächenmantelflächen, die von einer Zylinderform abweichen, der Fall sein kann.

Vorzugsweise weist der Rotationsscanner eine Beleuchtung auf, die, in Bezug auf die Anlegekraft gesehen, ebenfalls auf der Anlagenseite des Probenraumes angeordnet ist. Dementsprechend zeigen sich dieselben Vorteile, die für die Anordnung des Fokalbereichs bzw. für die Anordnung der Kamera gelten, auch für eine zugehörige Beleuchtung, welche insbesondere bei exakten Scannvorgängen, wie sie beispielsweise für Kontrollvorgänge erforderlich sind, vorhanden sein sollte.

Kumulativ bzw. alternativ sind zwei Anlagen vorgesehen, wobei die Kamera zwischen den Anlagen angeordnet ist. Insoweit kann sich ein Rotationsscanner mit wenigstens einer Kamera, die einen Fokalbereich aufweist, durch welchen ein zu scannender Oberflächenbereich eines in einem Probenraum befindlichen Körpers geführt werden soll, mit wenigstens zwei Anlagen, die in einem Winkel zueinander angeordnet sind, der sich zum Probenraum hin öffnet, und mit einer Einrichtung zum Rotieren eines zu scannenden Körpers um eine Rotationsachse, die eine Komponente, die parallel zu der Anlage ausgerichtet ist, aufweist, dadurch auszeichnen, dass die Kamera zwischen den Anlagen angeordnet ist.

Der erfindungsgemäße Rotationsscanner ermöglicht ein möglichst breites Spektrum verschiedener Oberflächengestaltungen von Körpern betriebssicher zu scannen, wenn der Fokalbereich die Tangesialebene nicht schneidet und die Tangentialebene berührt. Auf diese Weise können auch kleinere Oberflächenkrümmungsradien betriebssicher durch den Fokalbereich geführt und mithin von der Kamera entsprechend erfasst werden. Dementsprechend gestaltet sich letzterer Rotationsscanner besonders vorteilhaft, wenn der Fokalbereich zwischen den beiden Anlagen angeordnet ist, wobei dieses vorzugsweise auch für eine entsprechende Beleuchtung gilt.

Hierbei versteht es sich, dass eine derartige Öffnung von dem Probenraum weg durch Anlagen mit einem runden Querschnitt, insbesondere mit einem lediglich teilweise runden Querschnitt baulich einfach realisiert werden können. Insoweit können derartige Anlagen insbesondere durch Walzen oder Rollen bzw. durch Kugeln gebildet werden. Andererseits können derartige Anlagen beispielsweise auch durch eine Band oder durch Riemen, die entsprechend umlaufen, gebildet werden, wobei dann insbesondere durch ein Absenken des Bandes oder des Riemens im Bereich von Walzen oder Rollen eine entsprechende Öffnung der jeweiligen Anlage realisiert werden kann. Letzteres kann ggf. auch durch entsprechende Schrägen, über welche die Bänder oder Riemen laufen, umgesetzt werden, so dass ein runder Querschnitt nicht zwingend ist.

Die vorliegende Erfindung geht hierbei von der Grunderkenntnis aus, dass es von Vorteil ist, eine Kamera bzw. den Fokalbereich einer Kamera möglichst dicht neben einer Anlage, gegen welche ein zu scannender Körper in irgendeiner Weise gedrückt wird, anzuordnen. Bei einer Rotationsbewegung variiert die Oberfläche des Körpers dann in dem Fokalbereich verhältnismäßig wenig, da durch die Anlegekraft sichergestellt ist, dass die Oberfläche jeweils an der Anlage anliegt und eine Variation naturgemäß nur über einen variierenden Radius bedingt sein kann. Dementsprechend gestaltet sich vorliegende Erfindung besonders vorteilhaft, wenn die Anlage in Bezug auf die Kamera bzw. auf deren Fokalbereich ortsfest ausgebildet ist, wobei kleinere Schwankungen, solange sichergestellt ist, dass die Körperoberfläche jeweils betriebssicher den Fokalbereich durchläuft, unerheblich sind.

Durch vorliegende Erfindung ist es möglich, wenn auch nicht zwingend, den Rotationsscanner sehr kompakt zu bauen, da auf komplexe Nachführmechanismen für eine Kamera verzichtet werden kann. Insbesondere bedingt die Nähe von Kamera und Anlage auch, dass die beiden wesentlichen Baugruppen, welche für einen Rotationsscanner notwendig sind, äußerst kompakt nebeneinander angeordnet werden können.

Vorzugsweise rotiert wenigstens eine der Anlagen, so dass die Oberfläche des zu scannenden Körpers nicht bzw. nur minimal durch den Scanvorgang beeinträchtigt wird.

Als Anlage kann jede Anordnung dienen, welche eine geeignete Führung während einer Rotation ermöglicht. Insbesondere wenn rotierende Anlagen vorgesehen sein sollen, erweisen sich rotierende Walzen oder auch Kugeln als geeignet. Hierbei sind rotierende Walzen insbesondere für im Wesentlichen länglich ausgebildete Körper, die lediglich um eine Rotationsachse, auch wenn diese wandern oder sich verlagern sollte, drehangetrieben und sich durch ihre im Wesentlich zylinderförmige Oberflächenstruktur selbst stabilisieren, geeignet. Hierbei können jedoch insbesondere auch kegelartige Körper bzw. Körper mit verhältnismäßig komplexen Oberflächen, die jedoch eine wesentliche Raumachse aufweisen, senkrecht zu welcher gerade kein Scanvorgang stattfinden soll, über rotierende Walzen als Anlage geführt werden. Bei Körpern, die eine derartige Hauptachse nicht aufweisen, erscheinen komplexere Anlagen, wie sie beispielsweise durch eine Kugel gebildet werden können, vorteilhaft.

Es versteht sich, dass dementsprechend die Zahl der Anlagen derart gewählt ist, dass eine sichere Führung des Körpers, insbesondere der zu scannenden Oberfläche, innerhalb des Fokalbereichs, gewährleistet werden kann.

Vorzugsweise ist wenigstens eine der Anlagen drehangetrieben, so dass die Rotationsbewegung des zu scannenden Körpers durch diese Anlage gesteuert bzw. initiiert wird. Dieses ermöglicht einen Verzicht auf einen separaten Antrieb, so dass die Anordnung besonders kompakt baut.

In einer besonders bevorzugten Ausgestaltung weist der Rotationsscanner zwei konvex ausgebildete Anlagen, wie sie beispielsweise durch Walzen oder Kugeln realisiert werden können und die jeweils in ihrem zur Anlage kommenden Bereich einen Krümmungsradius aufweisen, auf, wobei die beiden Anlagen weniger als den doppelten Krümmungsradius voneinander beabstandet angeordnet sind. Auf diese Weise kann, insbesondere wenn der Fokalbereich zwischen den beiden Anlagen vorgesehen ist, der Fokalbereich verhältnismäßig klein gewählt werden, wobei dennoch sichergestellt ist, dass bei einer Rotation des Körpers sämtliche zu scannenden Oberflächenbereiche auch den Fokalbereich durchlaufen. Ein entsprechend klein gewählter Fokalbereich hat insbesondere den Vorteil, dass bereits bei geringeren Belichtungszeiten ein entsprechend gutes Bild gewährleistet ist, was insbesondere hohe Scangeschwindigkeiten oder aber auch eine geringere Beleuchtungsleistung ermöglicht.

Vorzugsweise sind die beiden Anlagen weniger als den 1,5-fachen Krümmungsradius, insbesondere weniger als den einfachen Krümmungsradius, voneinander beabstandet, wodurch sich der Fokalbereich entsprechend kleiner wählen lässt.

Es versteht sich, dass der zu scannende Körper nicht zwingend um 360° rotiert werden muss. Vielmehr sind auch Drehbewegungen um kleinere aber auch um größere Winkel unter gegebenen Umständen ausreichend, vorteilhaft oder zielführend. Dieses gilt insbesondere für Scannvorgänge, die im Zusammenhang mit dem Prüfen der Bedruckung eines Körpers stattfinden.

In diesem Zusammenhang wird, unabhängig von den übrigen Merkmalen vorliegender Erfindung, ein Verfahren zum Prüfen der Bedruckung eines Körpers vorgeschlagen, bei welchem ein zu prüfender Körper rotierend mittels eines Rotationsscanners gescannt wird und welches sich dadurch auszeichnet, dass zunächst eine Vorlage gewählt und eine Abwicklung eines Oberflächenbereichs des Körpers als Rapport gescannt wird und anschließend der Rapport und die Vorlage miteinander verglichen werden. Hierdurch kann unter Ausnutzung der Grundvoraussetzung, dass durch einen Rotationsscanner eine ebene Abbildung einer dreidimensionalen Oberfläche bereitgestellt werden kann, eine Prüfung eines sich dreidimensional manifestierenden Druckbildes erfolgen.

Vorzugsweise wird vor dem Scannen der Abwicklung der Umfang des zu prüfenden Körpers ermittelt. Auf diese Weise ist es möglich, den Scannvorgang auf ein Minimum zu begrenzen, da bei Rotationsbewegungen, wie aus der Natur derartiger Rotationsbewegungen unmittelbar folgt, nach bestimmter Zeit der identischen Oberflächenbereich mehrfach gescannt wird.

Dementsprechend ist es vorteilhaft, wenn die Abwicklung des Oberflächenbereichs des Körpers zumindest dem ermittelten Umfang entspricht, so dass der gesamte Umfang entsprechend gescannt wird und für eine Prüfung bereitsteht.

Da in der Regel die zu prüfenden Körper in einer nicht definierten Winkellage an einem Rotationsscanner angelegt werden, empfiehlt es sich, wenn die Abwicklung zumindest dem zweifachen ermittelten Umfang entspricht. Auf diese Weise ist sichergestellt, dass ein Nutzen, also ein Druck einer entsprechenden Urvorlage, die gegebenenfalls der vorstehend erwähnten Vorlage für die Prüfung identisch ist, wenigstens einmal ohne Unterbrechung am Ende oder zu Beginn des Scannvorgangs in dem Rapport zu finden ist. Gegebenenfalls ist es bei einer Abwicklung, die kleiner als der zweifache ermittelte Umfang ist, notwendig, den Rapport am Scannanfang und Scannende zu bearbeiten, indem diese in Deckung gebracht werden. Naturgemäß führt dieses zu einem höheren Risiko, dass ein Prüfungsergebnis verfälscht ist.

Zur Umfangsermittlung kann beispielsweise eine maximale Umfangsgröße des Rotationsscanners genutzt werden. Diese kann beispielsweise durch den Krümmungsradius der jeweiligen Anlangen, den Anlagenwalzendurchmesser oder die Größe des Probenraums vorgegeben sein. Eine derartige Umfangsermittlung hat den Vorteil, dass sie unabhängig von dem konkreten, zu prüfenden Körper ist und somit schnell und betriebssicher vorliegt. Andererseits hat eine derartige Umfangsermittlung den Nachteil, dass, insbesondere wenn in Bezug auf die maximale Umfangsgröße verhältnismäßig kleine Körper geprüft werden sollen, unnötig Bereiche des Körpers mehrfach gescannt werden.

Dementsprechend ist es beispielsweise von Vorteil, alternativ die Dimensionen des zu prüfenden Körpers zu verwenden. Diese Dimensionen können einerseits vor dem Scannvorgang einzeln gemessen oder ermittelt werden. Andererseits ist es denkbar, dass derartige Dimensionen vorab in einer Datenbank erfasst und je nach zu prüfendem Körper eingestellt werden. Hierbei kann die Einstellung beispielsweise manuell aber auch über eine automatische Zuordnung, beispielsweise durch eine Gewichtserkennung, eine Barcodelesung oder das Auslesen eines RFIDs, erfolgen. Als dementsprechend sinnvolle Dimensionen des zu prüfenden Körpers kommen insbesondere Radien, Durchmesser oder Umfänge in Frage.

Alternativ können zur Umfangsermittlung die Dimensionen der Vorlage verwendet werden, wobei hier insbesondere als Dimension die Längserstreckung der Vorlage senkrecht zur Rotationsachse bzw. senkrecht zu einer Richtung, welche der Rotationsachse entspricht, in Frage kommt.

Es versteht sich, dass sich in einer entsprechenden Prüfvorrichtung auch verschiedene Arten der Umfangsermittlung vorgesehen sein können, die je nach konkretem Einzelfall individuell gewählt werden.

Vorzugsweise wird nach dem Scannen des Rapports aus dem Rapport ein Nutzen ermittelt und dieser Nutzen mit der Vorlage verglichen. Eine derartige Nutzenermittlung ist beispielsweise bereits aus der WO 2005/025872 A1 hinlänglich für Rapports, die eine Vielzahl von Nutzen aufweisen, bekannt. Insbesondere bei einer Verfahrensführung, die lediglich den zweifachen Umfang scannt und eine bestimmte Winkellage des zu prüfenden Körpers nicht vorgibt, findet sich auf einem Rapport in der Regel lediglich ein einziger zusammenhängender Nutzen, der dann nach einer entsprechenden Ermittlung schnell und betriebssicher mit der Vorlage verglichen werden kann. Insofern kann durch eine derartige Nutzenermittlung aus einem Rapport, der aus einer zweifachen Abwicklung des Oberflächenbereiches des Körpers bereitgestellt wurde, bei minimaler Scannzeit eine betriebssichere Prüfung des Druckbildes erfolgen.

Es versteht sich, dass im Einzelfall eine entsprechende Prüfung auch bei weniger als einer zweifachen Abwicklung des Oberflächenbereichs vorgenommen werden kann, wenn die Winkellage, mit welcher der Körper an den Scanner angelegt wird, bekannt ist.

Die Nutzenermittlung hat darüber hinaus den Vorteil, wenn an einer Körperoberfläche lediglich kleinere Bereiche bedruckt sind und einer entsprechenden Prüfung unterzogen werden müssen. Hierbei ist es dann nicht notwendig, die gewählte Vorlage zu bearbeiten, um Leerbereiche zu erzeugen, die dann ebenfalls mit geprüft werden, da dieses letztendlich höchstens zu einer Verfälschung des Prüfergebnisses führen kann.

Weitere Vorteile, Ziele und Eigenschaften vorliegender Erfindung werden in nachfolgender Beschreibung anliegender Zeichnung erläutert, in welcher beispielhaft ein erfindungsgemäßer Rotationsscanner dargestellt ist.

In der Zeichnung zeigen:
- Figur 1: eine perspektivische Prinzipdarstellung eines erfindungsgemäßen Rotationsscanners;
- Figur 2: den Rotationsscanner nach Figur 1 in einer Seitenansicht mit einer Verdeutlichung der gewinkelten Anlage und des Fokalbereichs;
- Figur 3: den Rotationsscanner nach Figur 1 in einer Seitenansicht mit einer Verdeutlichung des Fokalbereichs und der Tangentialebene der Anlage; und
- Figur 4: die Anordnung nach Figuren 1 bis 3 mit einem kleineren zu scannenden Körper.

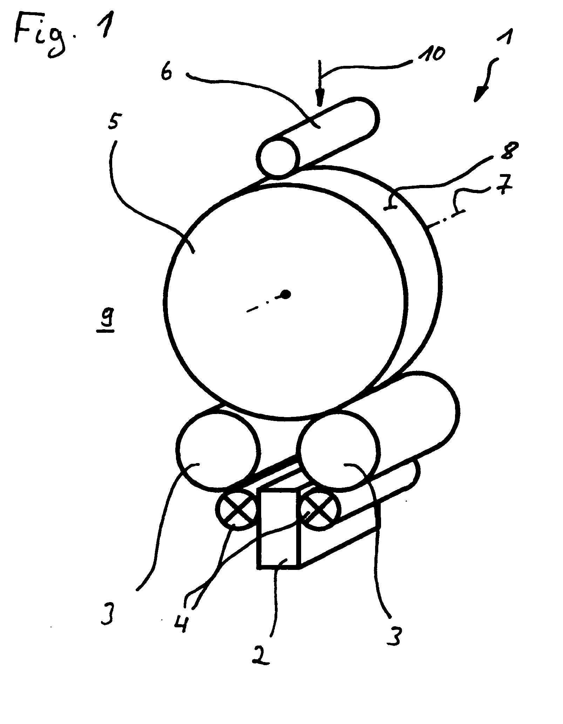

Der in den Figuren 1 bis 4 dargestellte Rotationsscanner 1 weist eine Kamera 2 sowie zwei Anlagenwalzen 3 und zwei Beleuchtungskörper 4 auf, über welche ein zu scannender Oberflächenbereich 8 eines zu scannenden Körpers 5 gescannt werden kann, in dem dieser um eine Rotationsachse 7 in Rotation versetzt wird.

Bei vorliegendem Ausführungsbeispiel geschieht dieses, in dem die beiden Anlagenwalzen 3 drehangetrieben werden.

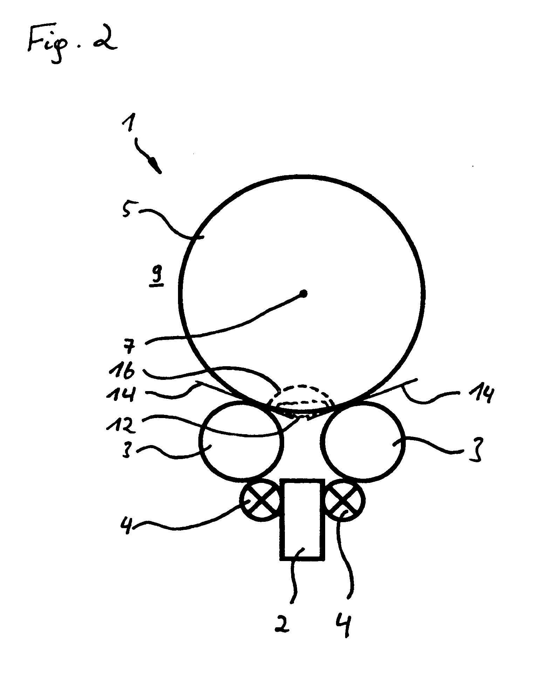

Wie in Figur 2 exemplarisch dargestellt, bilden die Anlagenwalzen 3 jeweils Anlagenebenen 14, die letztlich durch Tangentialen in einem Berührungspunkt bzw. in einer Berührungslinie zwischen dem zu scannenden Körper 5 und der jeweiligen Anlagenwalze 3 definiert sind und die in einem Winkel 16 zueinander stehen, der sich zu einem Probenraum 9 hin öffnet, und mithin einen Zwickel bilden, in welchem der zu scannende Körper anliegen kann. Wie unmittelbar ersichtlich ist der Öffnungswinkel 16 der Anlagenebene 14 kleiner 180°, wobei hierzu letztlich nicht zwingend Anlagenwalzen 3vorgesehen sein müssen.

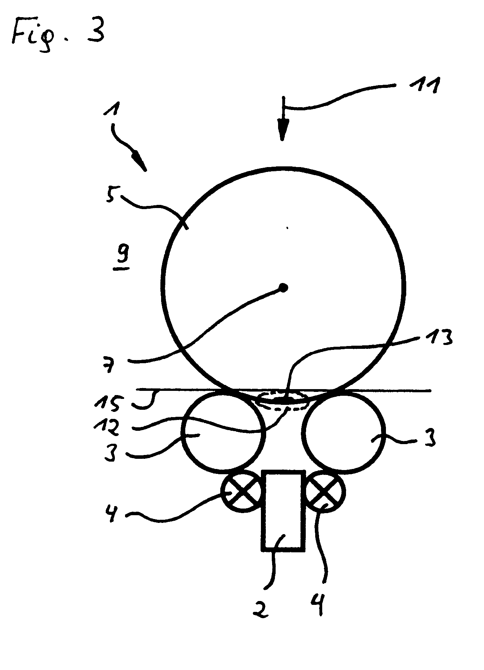

Darüber hinaus kann, wie Figur 3 erläutert, in Bezug auf die beiden Anlagenwalzen 3 eine probenraumseitig aufliegende Tangentialebene 15 definiert werden. Ist die Tangentialebene 15 im Wesentlichen horizontal ausgerichtet, so bedingt schon die auf dem Körper 5 wirkende Schwerkraft eine Anlegekraft 11, welche sicherstellt, dass der Körper 5 an den Anlagenwalzen 3 anliegt. Hierbei versteht es sich, dass die Anlegekraft 11 nicht zwingend senkrecht zur Tangentialebene 15 ausgerichtet sein muss, solange sichergestellt ist, dass der zu scannende Körper 5 ausreichend betriebssicher an den Anlagenwalzen 3 bzw. an entsprechenden, anderen Anlagen anliegt. Gegebenenfalls kann eine Anpresswalze 6 vorgesehen sein, wie dieses in Figur 1 exemplarisch angedeutet ist. Schon um den Körper in den durch die beiden Anlageebenen 14 gebildeten Zwickel einzuführen, ist die Anpresswalze 6 vorzugsweise entlang des Pfeils 10 beweglich angeordnet. Wird sie in Pfeilrichtung 10 mit einer Kraft beaufschlagt, so kann hierdurch die Anlegekraft 11 auch bei Anordnungen, bei denen die Schwerkraft nicht für eine ausreichend betriebssichere Anlage sorgen kann, gewährleistet werden. Dieses gilt insbesondere auch für Fälle, in denen die Tangentialebene 15 nicht horizontal angeordnet ist.

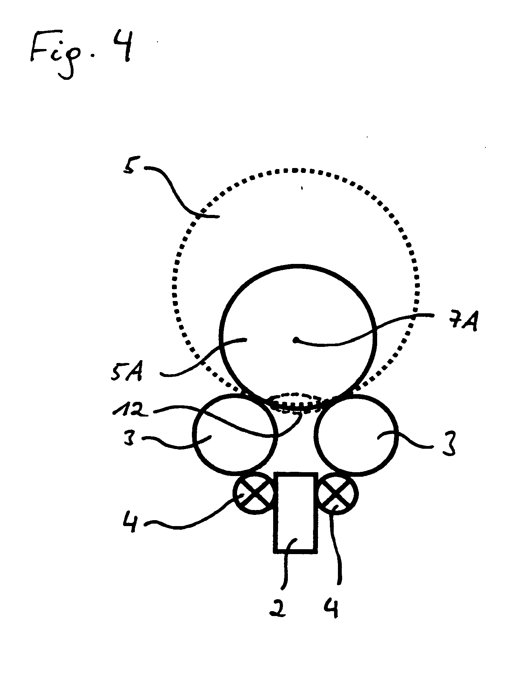

Wie unmittelbar aus Figuren 2 und 3 ersichtlich, ist ein Fokalbereich 12 der Kamera 2 zwischen den Anlagenwalzen 3 angeordnet. Dabei ist der Fokalbereich 12 derart gewählt, dass er die Tangentialebene nicht schneidet. Auf diese Weise können auch ebene Oberflächenbereiche eines zu scannenden Körpers 5 betriebssicher erfasst werden. Diese Anordnung gewährleistet darüber hinaus, dass auch verhältnismäßig enge Oberflächenradien, bei welchen der zu scannende Körper verhältnismäßig tief zwischen die beiden Anlagenwalzen 3 eintaucht, betriebssicher erfasst werden können. Dieses ist insbesondere auch anhand Figur 4 nachvollziehbar, welche den Rotationsscanner 1 mit einem kleineren zu scannenden Körper 5A darstellt, der einen entsprechend kleineren Durchmesser aufweist und somit eine andere Lage der Rotationsachse 7A bedingt. Unmittelbar nachvollziehbar ist, dass die Oberfläche des jeweils zu scannenden Körpers auch komplexer gewählt sein kann.

Wie in Figur 3 dargestellt, liegt das Zentrum 13 des Fokalbereiches deutlich anlagenseitig hinsichtlich der Tangentialebene 15.

Gegebenenfalls kann die Anordnung zwischen Anlagenwalzen 3 und Kamera 2 sowie Beleuchtung 4 geändert werden. Insbesondere ist es denkbar, die Beleuchtung 4 auch in den Anlagenwalzen 3 vorzusehen. Ebenso kann es ausreichen, lediglich einseitig bezüglich der Kamera 2 eine Beleuchtung 4 vorzusehen. Darüber hinaus versteht es sich, dass gegebenenfalls die Kamera auch in unmittelbarer Nähe neben eine der Anlagenwalzen 3, aber mit einem Fokalbereich 12 der rechts- bzw. links (in Bezug auf Figuren 2 und 3 gesehen) neben der Anordnung aus beiden Anlagenwalzen 3 vorgesehen ist, anzuordnen und dennoch zu gewährleisten, dass auch bei sich ändernden Radien der Körperoberfläche das Maß einer Nachführung der Beleuchtung 4 bzw. einer Kamera 2 auf ein Minimum begrenzt werden kann. Hierbei ist es unmittelbar nachvollziehbar, dass dieses umso mehr gelingt, je weiter der Fokalbereich 12 in der Nähe des Gebiets zwischen den beiden Anlagenwalzen 3 vorgesehen wird.

Weiters berührt der Fokalbereich 12 auch die Tangentialebene 15, so dass auch ebene Oberflächenbereiche gescannt werden können. Jedoch liegt der Fokalbereich 12 nicht oberhalb der Tangentialebene 15, so dass möglichst Körper 5 mit niedrigen Krümmungsradien gescannt werden können.

Darüber hinaus ist es bei dieser Anordnung auch ohne Weiteres möglich, dass durch eine geeignete Ansteuerung der Anpresswalzen 3 der zu scannende Körper 5 nicht nur in Rotation versetzt sondern auch aus dem durch die Anlageebenen 14 gebildeten Zwickel herausbewegt werden kann.

Bezugszeichenliste:
- 1: Rotationsscanner
- 2: Kamera
- 3: Anlagenwalze
- 4: Beleuchtung
- 5: zu scannender Körper
- 6: Anpresswalze (optional)
- 7: Rotationsachse
- 8: zu scannender Oberflächenbereich
- 9: Probenraum

- 10: Bewegungsrichtung der Anpresswalze
- 11: Anlegekraft
- 12: Fokalbereich
- 13: Zentrum des Fokalbereichs
- 14: Anlageebene
- 15: Tangentialebene
- 16: Öffnungswinkel der Anlagenebenen

## Patentansprüche

1. Rotationsscanner (1) zum Scannen eines Oberflächenbereichs (8) eines Körpers (5), dessen Oberflächenmantelfläche von einer Zylinderform abweichen kann, mit wenigstens einer Kamera (2), die einen Fokalbereich (12) aufweist, durch welchen der zu scannende Oberflächenbereich (8) des in einem Probenraum (9) befindlichen Körpers (5) geführt wird, mit wenigstens zwei Anlagen, die sich von dem Probenraum (9) weg öffnen, und mit einer Einrichtung zum Rotieren des zu scannenden Körpers (5), **dadurch gekennzeichnet, dass** der Fokalbereich (12) ein Zentrum (13) aufweist, welches in Bezug auf eine auf beiden Anlagen probenraumseitig aufliegende Tangentialebene (15) anlagenseitig angeordnet ist, wobei der Fokalbereich (12) die Tangentialebene (15) nicht schneidet und die Tangentialebene (15) berührt.

2. Rotationsscanner nach Anspruch 1, **dadurch gekennzeichnet, dass** der Fokalbereich (12) zwischen den beiden Anlagen angeordnet ist.

3. Rotationsscanner nach einem der Ansprüche 1 oder 2, **gekennzeichnet durch** zwei konvex ausgebildete Anlagen, die jeweils in ihrem zur Anlage kommenden Bereich einen Krümmungsradius aufweisen, wobei die beiden Anlagen weniger als den doppelten Krümmungsradius, vorzugsweise weniger als den 1,5-fachen Krümmungsradius, insbesondere weniger als den einfachen Krümmungsradius, voneinander beabstandet angeordnet sind.

4. Rotationsscanner nach einem der vorstehenden Ansprüche, **dadurch gekennzeichnet, dass** ein zu scannender Körper (5) ungelagert an der wenigstens einen Anlage geführt ist.

## Claims

1. A rotational scanner (1) for scanning a surface area (8) of a body (5) the outside surface area of which can deviate from a cylindrical shape, with at least one camera (2) comprising a focal range (12) through which the surface area (8) of the body (5) in a sample chamber (9) is guided in order to be scanned, with at least two pieces of equipment opening away from the sample chamber (9), and a device for rotating the body (5) to be scanned, **characterised in that** the focal range (12) comprises a centre (13), which is arranged on the equipment side with respect to a tangential plane (15) overlying both pieces of equipment on the sample chamber side, wherein the focal range (12) does not intersect the tangential plane (15) and contacts the tangential plane (15).

2. The rotational scanner according to claim 1, **characterised in that** the focal range (12) is disposed between the two pieces of equipment.

3. The rotational scanner according to claim 1 or 2, **characterised by** two convexly shaped pieces of equipment each having a radius of curvature in the contacting area, wherein the two pieces of equipment are spaced apart from each other by less than twice the radius of curvature, preferably less than 1.5 times the radius of curvature, in particular less than 1 times the radius of curvature.

4. The rotational scanner according to one of the preceding claims, **characterised in that** the body (5) to be scanned is guided, unsupported, along the at least one piece of equipment.

## Revendications

1. Balayeur à rotation (1) pour balayer une zone de surface (8) d'un corps (5), dont la surface d'enveloppe surfacique peut dévier par rapport à une forme cylindrique, avec au moins une caméra (2) présentant une zone focale (12) à travers laquelle on fait passer la zone de surface (8) à balayer du corps (5) se trouvant dans l'espace d'échantillon (9), avec au moins deux installations qui s'ouvrent en tournant le dos à l'espace d'échantillon (9), et avec un dispositif pour la rotation du corps (5) à balayer, **caractérisé en ce que** la zone focale (12) présente un centre (13), lequel est disposé côté installation compte tenu d'un plan tangentiel reposant sur les deux installations côté espace d'échantillon, moyennant quoi la zone focale (12) ne coupe pas le plan tangentiel (15) et touche le plan tangentiel (15).

2. Balayeur à rotation selon la revendication 1, **caractérisé en ce que** la zone focale (12) est disposée entre les deux installations.

3. Balayeur à rotation selon l'une des revendications 1 ou 2, **caractérisé par** deux installations réalisées de manière convexe, lesquelles présentent respectivement un rayon de courbure dans leur zone arrivant en butée, moyennant quoi les deux installations sont disposées de manière espacée l'une par rapport à l'autre de moins du double du rayon de courbure, de préférence de moins de 1,5 fois le rayon de courbure, en particulier de moins du simple rayon de courbure.

4. Balayeur à rotation selon l'une des revendications précédentes, **caractérisé en ce qu'**un corps (5) à balayer est guidé de manière non montée sur cette au moins une installation.
